# EUROPEAN PATENT SPECIFICATION

(11) **EP 2 953 107 B1**
(45) Date of publication and mention of the grant of the patent: **20.02.2019**
(21) Application number: 15172210.5
(22) Date of filing: 05.11.2002
(51) Int. Cl.: G08C 17/00, G06F 13/00, H04N 5/44, H04N 5/445, H04N 21/41, H04N 21/422, H04N 21/47, H04N 21/431, H04N 21/25, H04N 21/472, H04N 21/482, H04N 21/45

(54) **SYSTEM AND METHOD FOR INTERACTING WITH A PROGRAM GUIDE DISPLAYED ON A PORTABLE ELECTRONIC DEVICE**
SYSTEM UND VERFAHREN ZUM DIALOG MIT EINER AUF EINEM TRAGBAREN ELEKTRONISCHEN GERÄT ANGEZEIGTEN PROGRAMMANLEITUNG
SYSTÈME ET PROCÉDÉ PERMETTANT D'INTERAGIR AVEC UN GUIDE DE PROGRAMMES AFFICHÉ SUR UN DISPOSITIF ÉLECTRONIQUE PORTABLE

(30) Priority: 20.12.2001 US 344020 P; 09.04.2002 US 371223 P; 22.04.2002 US 374556 P; 20.06.2002 US 390167 P
(43) Date of publication of application: 09.12.2015
(62) Divisional of application: 11163543.9
(73) Proprietor: Universal Electronics, Inc., Santa Ana, CA 92707 (US)
(72) Inventor: Dresti, Mauro, Cypress, CA 90630-4841 (US); Haughawout, Joseph, Cypress, CA 90630-4841 (US); Yuh, Han-Sheng, Walnut, CA 91789 (US); Klein, Sandro, Cypress, CA 90630 (US); Louie, Alex, Cypress, CA 90630-4841 (US); Huang, Steve, Placentia, CA 92870 (US); Hayes, Patrick H, Mission Viejo, CA 92691 (US); WANG, William Weidong, Tustin, CA 92780 (US)
(74) Representative: CMS Cameron McKenna Nabarro Olswang LLP

(56) References cited:
- US-A- 5 988 078

## Description

### BACKGROUND OF THE INVENTION

This invention generally relates to portable electronic devices having a display and communication capabilities. Exemplary devices include personal digital assistants ("PDAs"), Web Tablets, touch screen remote controls, lap-top computers, and the like. US 5,988,078 discloses use of a personal computer to assist in the selection of television programs to be recorded at future times and to control a video tape recorder to implement the selected recordings. Schedule information is customised for the available cable service.

### SUMMARY OF THE INVENTION

According to the invention, there is provided a method for controlling the operation of a plurality of consumer electronic devices as described in the accompanying claims. In accordance with the description that follows, a system and method is provided for navigating a program guide and/or for using a program guide to command operation of an appliance. An understanding of the objects, advantages, features, properties and relationships of the invention will be obtained from the following detailed description and accompanying drawings which set forth illustrative embodiments and which are indicative of the various ways in which the principles of the invention may be employed.

### BRIEF DESCRIPTION OF THE DRAWINGS

For a better understanding of the various aspects of the invention, reference may be had to preferred embodiments shown in the attached drawings in which:
Figs. 1-4 illustrate an exemplary program guide and an exemplary system for navigating within the program guide;
Figure 5 illustrates an exemplary method for accessing an illustrated, exemplary program guide calendar;
Figure 6 illustrates an exemplary method for accessing an illustrated, exemplary program information window;
Figures 7-11 illustrates exemplary methods for accessing an illustrated, exemplary zoomed-in portion of a program guide;
Figure 12 illustrates an exemplary device platform having hard keys for use in transmitting command codes to one or more target appliances;
Figure 13 illustrates an exemplary display for providing information relevant to the hard keys of Fig. 12 ;
Figures 14-18 illustrate an exemplary graphical user interface method for configuring the hard keys of Fig. 12 to cause the transmission of commands to command the operation of one or more appliances;
Figure 19 illustrates an exemplary method for causing the transmission of commands to command the operation of one or more appliances via interaction with a program guide; and
Figures 20-21 illustrate an exemplary method for configuring device transmissions in response to interaction with the program guide.

### DETAILED DESCRIPTION

A universal remote control and program guide application are provided for executing on a portable electronic device 10. By way of example, representative platforms for the device 10 include, but are not limited to, devices such as remote controls, lap-top computers, Web Tablets and/or PDAs manufactured by HP/Compaq (such as the iPAQ brand PDA), Palm, Visor, Sony, etc. Thus, a preferred underlying platform includes a processor coupled to a memory system comprising a combination of ROM memory, non-volatile read/write memory, and RAM memory (a memory system); a key matrix in the form of physical buttons; an internal clock and timer; a transmission circuit; a power supply; a touch screen display to provide visible feedback to and accept input from a consumer; and I/O circuitry for allowing the device to exchange communications with an external computersuch as server and/or client. Additional input circuitry, such as a barcode reader, may also be utilized.

To control the operation of the device 10, the memory system includes executable instructions that are intended to be executed by the processor. In this manner, the processor may be programmed to control the various electronic components within the device 10, e.g., to monitor power, to cause the transmission of signals, etc. Within the memory system, the ROM portion of memory is preferably used to store fixed programming and data that remains unchanged for the life of the product. The non-volatile read/write memory, which may be FLASH, EEPROM, battery-backed up RAM, "Smart Card," memory stick, or the like, is preferably provided to store consumer entered setup data and parameters, downloaded data, etc., as necessary. RAM memory may be used by the processor for working storage as well as to hold data items which, by virtue of being backed up or duplicated on an external computer (for example, a client device) are not required to survive loss of battery power. While the described memory system comprises all three classes of memory, it will be appreciated that, in general, the memory system can be comprised of any type of computer-readable media, such as ROM, RAM, SRAM, FLASH, EEPROM, or the like in combination. Preferably, however, at least part of the memory system should be non-volatile or battery backed such that basic setup parameters and operating features will survive loss of battery power. In addition, such memories may take the form of a chip, a hard disk, a magnetic disk, and/or an optical disk without limitation.

For commanding the operation of appliances of different makes, models, and types, the memory system may also include a command code library. The command code library is comprised of a plurality of command codes that may be transmitted from the device 10 under the direction of application(s) for the purpose of controlling the operation of an appliance. The memory system may also includes instructions which the processor uses in connection with the transmission circuit to cause the command codes to be transmitted in a format recognized by an identified appliance. While the transmission circuit preferably utilizes infrared transmissions, it will be appreciated that other forms of wired or wireless transmissions, such as radio frequency, may also be used.

To identify appliances by type and make (and sometimes model) such that application(s) of the device 10 are adapted to cause the transmission of command codes in the format appropriate for such identified appliances, information may be entered into the device 10. Since methods for setting up an application to cause the transmissions of commands to control the operation of specific appliances are well-known, they will not be described in greater detail herein. Nevertheless, for additional details pertaining to remote control setup, the reader may turn to U.S. Patent Nos. 6,225,938 , 4,623,887 , 5,872,562 , 5,614,906 , 4,959,810 , 4,774,511 , and 4,703,359.

To cause the device 10 to perform an action, the device 10 is adapted to be responsive to events, such as a sensed consumer interaction with one or more keys on the key matrix, a sensed consumer interaction with the touch screen display, or a sensed signal from an external source such as a remote computer. In response to an event, appropriate instructions within the memory system are executed. For example, when a hard or soft command key associated with a remote control application is activated on the device 10, the device 10 may read the command code corresponding to the activated command key from the memory system and transmit the command code to an appliance in a format recognizable by the appliance. It will be appreciated that the instructions within the memory system can be used not only to cause the transmission of commands codes to appliances but also to perform local operations. While not limiting, local operations that may be performed by the device that are related to the remote control functionality include favorite channel setup, macro button setup, command function key relocation, etc. Examples of such local operations can be found in U.S. Patent Nos. 5,481,256 , 5,959,751 , 6,014,092 .

As discussed, the platform of the device 10 preferably comprises a general purpose, processor system which is controllable by software. The software may include routines, programs, objects, components, and/or data structures that perform particular tasks that can be viewed as an operating system together with one or more applications. The operating system, such as the "Windows CE" brand operating system or the like, provides an underlying set of management and control functions which are utilized by applications to offer the consumer functions such as a calendar, address book, spreadsheet, notepad, Internet browsing, etc., as well as control of appliances. Thus, it is to be understood that applications in addition to or complimentary with the remote-control-like application can also be supported by the device 10 and, as such, in terms of the internal software architecture, the remote-control-like application may be but one of several possible applications which may co-exist within the device 10.

In terms of providing operating system functionality, it should also be understood that the demarcation between the device 10 and a host/client computer, described in greater detail hereinafter, may vary considerably from product to product. For example, at one extreme the device 10 may be nothing more than a slave display and input device in wireless communication with a computer that performs all computational functions. At the other extreme, the device 10 may be a fully-functional computer system in its own right complete with local mass storage. It is also to be appreciated that a hardware platform similar to that described above may be used in conjunction with a scaled-down operating system to provide remote control functionality only, i.e., as a standalone application. In all cases, however, the principles expressed herein remain the same.

To provide a means by which an consumer can interact with the device 10, the device 10 is preferably provided with software that implements a graphical user interface. The graphical user interface software may also provide access to additional software, such as a browser application, that is used to display information that may be received from an external computer.

For simplifying the process of navigating a downloaded program guide, which would be comprised of a grip of channels, times, and program information, the device 10 utilizes a program guide interface that takes advantage of the touch-screen style display. In particular, the program guide interface is designed to overcome one of the more annoying aspects associated with presently known program guides which results when consumers attempt to step from one channel (or time) to another channel (or time) that is relatively far away within a program guide. In particular, to navigate within presently known program guides, the consumer must repetitively press a navigation key, such as up/down, page up/down, time +/, day forward/back, etc. As will be appreciated, navigation in this manner becomes increasingly tedious and frustrating to consumers as the number of entries within the program guide expands (e.g., with the addition of digital cable channels, satellite channels, etc.).

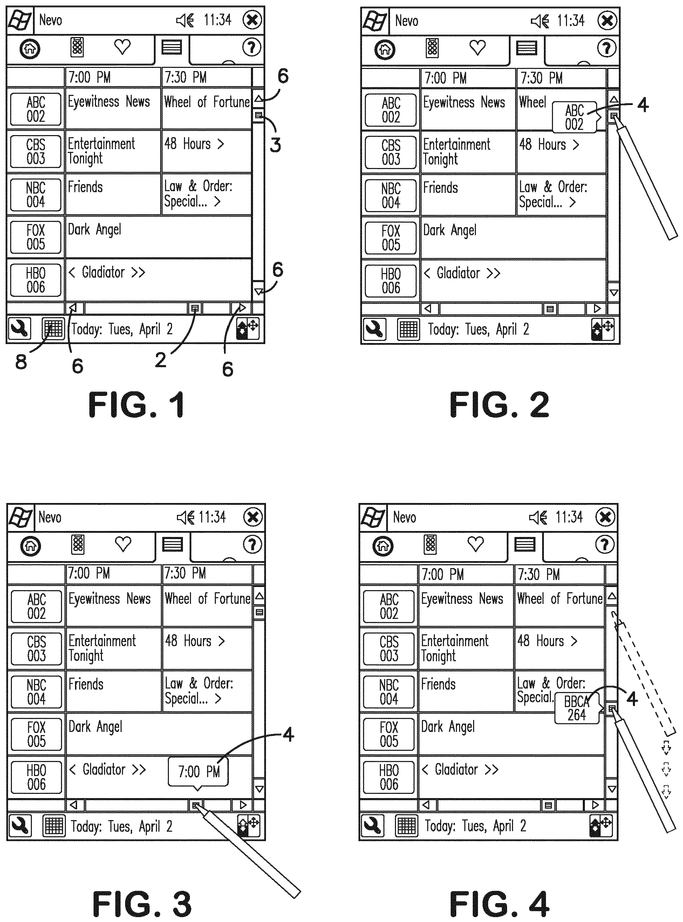

To address this problem, the user interface of the device 10 provides a horizontal slider 2 and a vertical slider 3 that, as illustrated in Fig. 1 , allows for ease of movement through channels and times that are contained within the program guide. When a slider 2/3 is first touched with a stylus, finger, or the like, (i.e., a first user input is received) a banner 4 pops up next to the slider 2/3. The banner 4 includes a representation that corresponds to the current position of the slider as illustrated in Figs. 2 and 3 . As will be appreciated, the current, relative position of the slider 2/3 within the slider bar is representative of the guide information currently being displayed relative to the entirety of information within a given program guide that is displayable.

When a sliders 2/3 is moved, the information in the banner 4 is preferably, continuously updated to display the relative position of the slider 2/3 within the slider bar so as to provide an indication of the guide information that would be displayed relative to the entirety of information within a given program guide that is displayable should the slider 2/3 be released. For example, the banner 4 might indicate a channel corresponding to the current position of the slider 3 (e.g., channel program information that would be displayed at the top of the display as the starting point of the displayed information) or the banner 4 might indicate a time corresponding to the current position of the slider 2 (e.g., program information for a time period that would be displayed at a side of the display as the starting point of the displayed information). It is further preferred that the underlying information that is displayed not be changed as a slider 2/3 is moved until the slider 2/3 is released (e.g., the stylus is lifted off the slider as a second user input) as illustrated in Fig. 4 . In this way a consumer that wishes to change the channel program information being viewed from, for example, CBS (channel 2) to BBC America (channel 264), need only grab the slider 3, move the slider 3 vertically until it shows "BBCA 264," and then release the slider 3. A similar approach applies to the time slider 2 which allows you to move the program guide display horizontally to any hour in the current day. It will be appreciated that the second user input that results in the changing of the displayed grid information may also require acts in addition to or in lieu of the user merely releasing the slider (e.g., a double tap of the slider, activation of another icon, etc.).

To accommodate consumers that who prefer the old way of navigating through the information in the program guide, the interface allows the consumer to tap the arrows 6 at the ends of each slider bar to move/scroll the information one logical page either vertically or horizontally. In the illustrated example, a logical page vertically would comprise 5 rows of channels and one logical page horizontally would comprise a one hourtime period. When moving thorough the program guide grid in this manner, the position of the sliders 2/3 should be updated to reflect the current, relative information being displayed. During this procedure, it is not necessary for a banner 4 to be displayed.

To allow the consumer to change the time period for the entirety of the displayable program guide information, e.g., to change days, the interface may provide two options. First, if the time slider (e.g., horizontal slider 2) is moved all the way to its slider bar limit (e.g., the right which is illustrated as corresponding to 11:00 PM - i.e., the end of the current displayable information) and the arrow 6 on the slider bar adjacent to the limit is clicked, the guide information rolls over to the next time period (e.g., 00:00 AM) and the time slider is automatically repositioned to the start of the slider bar (e.g., the extreme left hand side). A similar procedure performed in the reverse direction would be utilized to change the program guide information that is displayable to an earlier time period.

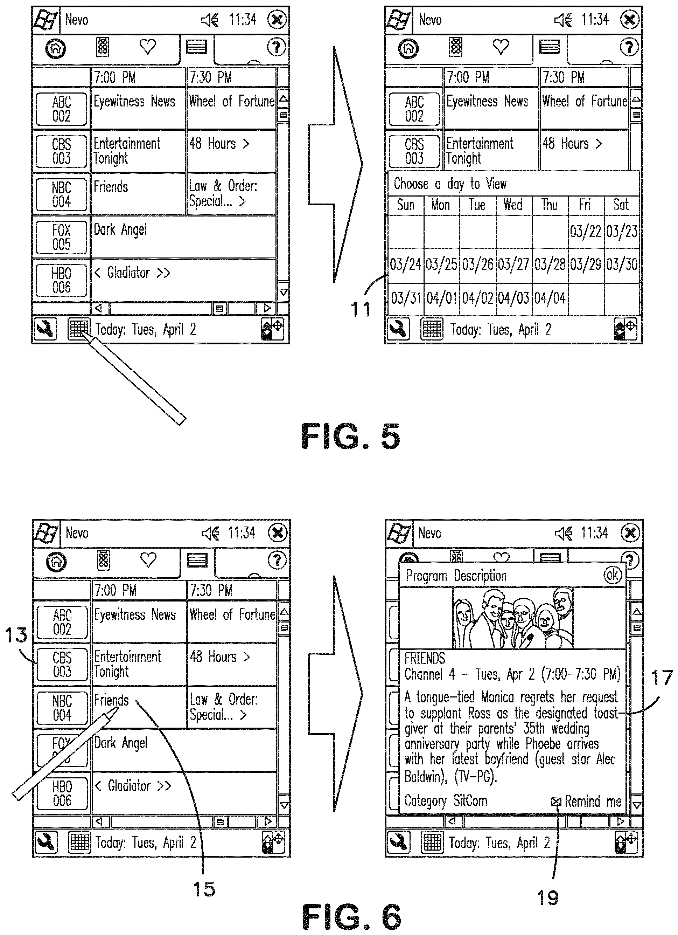

Alternatively, the consumer may activate (i.e., touch) a "calendar" icon 8 which is illustrated at the bottom left of the display to the left of the date. When the calendar icon 8 is touched, a calendar display 11 can be caused to appear as illustrated in Fig. 5 . The calendar display 11 allows two purposes to be served. First, the calendar display 11 allows the consumer to go directly to any day shown by simply selecting that day on the calendar. Second, the calendar display 11 can serve as an indication to the consumer of how many days worth of program guide information remains when, for example, the consumer needs to dock the device 10 and/or log onto a Web site in order to download guide information. In the example shown in Fig. 5 , the calendar display 11 informs the consumer that the guide information currently being displayed is for April 2<nd>, this indication being made by providing a distinct, coloring, shading, etc. to the date, for example. The calendar display 11 may further inform the consumer that the consumer last downloaded two weeks worth of guide data on March 22<nd> and has not logged on/synchronized with the guide database since then, these dates being indicated by being labeled, for example. Thus, as illustrated, the consumer is informed that they only have two more days of current information left (April 3 and 4) - which is indicated by the days following April 4 being labeled and not being hi-lighted, for example. The consumer can navigate immediately to gain access to program guide information, i.e., the programming grid, for either of the hi-lighted days, April 3 or April 4 (or, for that matter, to any of the days already past) by selecting that data on the calendar page 11. Thus, it will be appreciated that the calendar page 11 functions as a visual gauge to display the amount of schedule information remaining and serves as a reminder that the consumer should refill this information.

Once the consumer has positioned the program guide to the desired time/channel information, touching a channel button 13 (e.g., the left column) can cause the device 10 to instruct an appliance to immediately switch to that channel (i.e., to send the IR command(s) to switch to that chamel.) Furthermore, touching a program name 15, "Friends" in the example shown, can cause the display of additional information in a window 17, for example, regarding that program. When information for a program that is scheduled to air some time in the future is displayed, a "Remind me" checkbox 19, or other known GUI element, can also be presented to the consumer. Selecting this checkbox 19 can be used to cause a reminder to be automatically entered into a calendar application supported by the device 10.

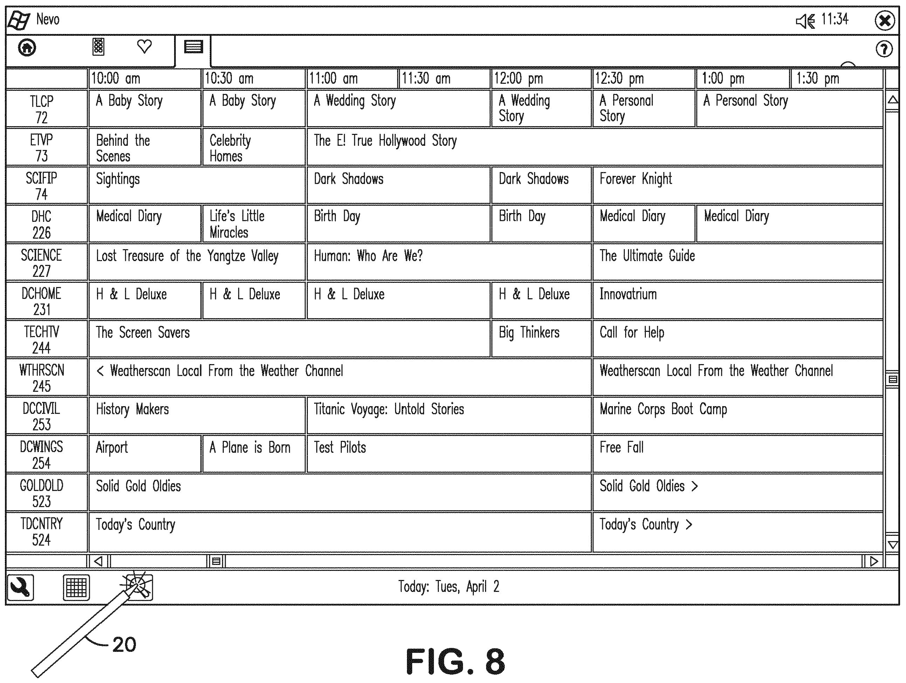

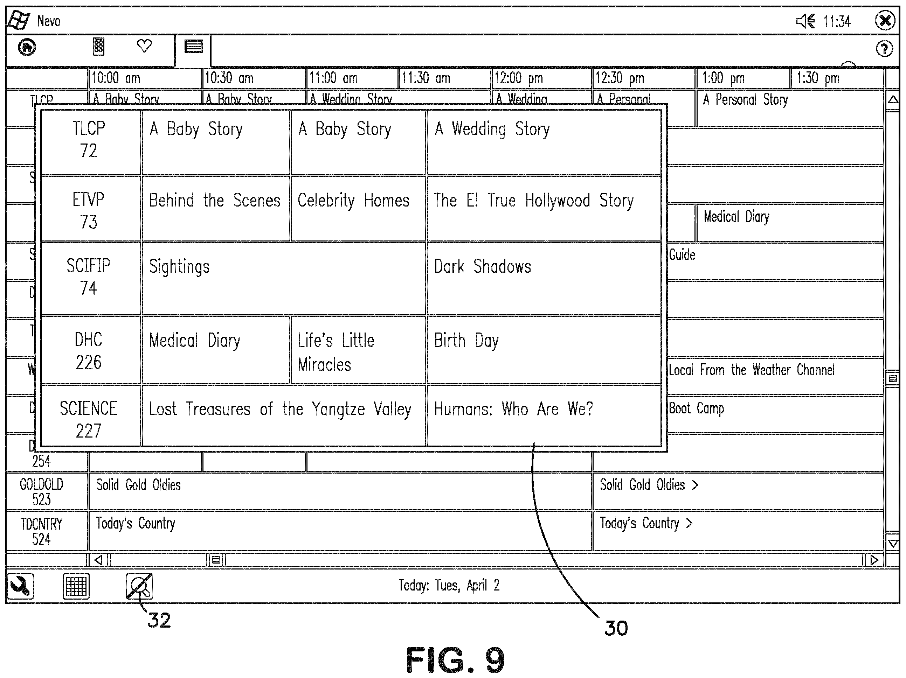

For improving the visibility of programming information contained within the program guide, particularly for consumers with imperfect eyesight, and/or on devices such as high-resolution Web tablets capable of displaying a large amount of information on a relatively small screen area, the device 10 can provide a means for accessing an enlarged or zoomed representation of a portion of the program guide. To this end, as illustrated in Fig.s 7 and 8 , a "zoom" button 12 may be provided as a soft key at a convenient location within the display, for example, in the illustrated bottom of the display, adjacent the display as a hard key, etc. In response to an activation of the "zoon" button 12, e.g., by touching a softkey with a stylus 20, with a finger, moving a cursor over the icon and activating/clicking a hard key, etc. as illustrated in Fig. 8 , an enlarged display 30 comprising a subgroup of the displayable program guide information is presented to the user, as illustrated in Fig. 9 .

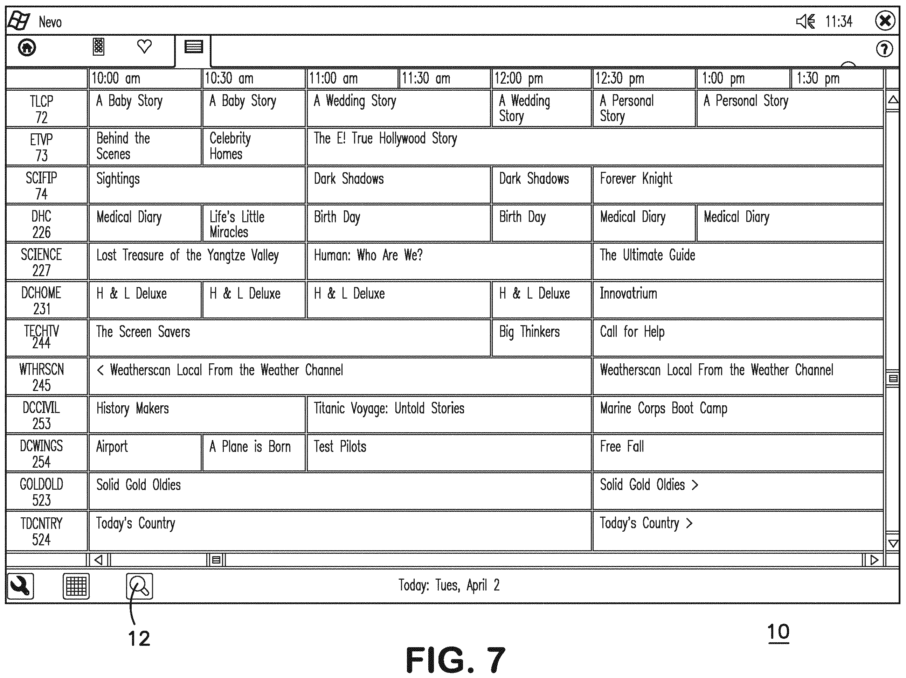

The portion of the program guide displayed as the enlarged portion 30 may be used to display a predetermined amount of programming information to the user (e.g., programming information related to a predetermined range of channels and/or predetermined time periods) or simply contain as much programming information as can be fit into the enlarged display based upon the font size, etc. selected for use in the zooming application. Furthermore, the specific programming information that is contained within the enlarged portion 30 of the program guide may also be predetermined (e.g., based only upon the portion of the program guide that is visible within the display prior to enlargement- see Fig. 7) or established using user-preferences. For example, the enlarged portion of the program guide 30 may comprise an enlarged view of programming information (i.e., programming grid cells) for a predetermined number of channels (in the illustrated example the number is 5) commnencing from a predetermined starting channel number (in the example, the starting channel number "72" corresponds to the channel number that is at a predetermined position - such as at the top of the un-enlarged guide as illustrated in Fig. 7). Similarly, the enlarged portion of the program guide 30 may comprise an enlarged view of programming information for one or more channel listings over a predetermined time period (in the illustrated example 2 hours) commencing from a predetermined starting time (in the example, the starting time corresponds to a predetermined time - such as the time at the left most portion of the un-enlarged guide as illustrated in Fig. 7). It is also contemplated that the predetermined time could be a time commencing with a current time that is maintained within the device 10. As noted, the enlarged guide portion 30 may also contain programming information that is consumer-specified, such as programming information pertaining to consumer - specified favorite channels (either commencing at a consumer-specified channel, including only those specified by a consumer, those determined to be most selected by a consumer, etc.) and/or user-specified favorite times.

For the purpose of demonstrating to the consumer that the device 10 is in zoom mode, i.e., the display is showing an enlarged portion of the program guide, the appearance of the icon 12 may be changed. By way of example, the icon 12 can be presented with a line through it to show an activated condition as illustrated by the icon 32 of Fig. 9 . In this case, the icon in question acts as a toggle to switch in and out of zoom mode and thus the representation illustrated by 32 in Fig. 9 is used to indicate that the next activation of this icon will cancel the zoom mode. It is also contemplated that the color of the icon can be changed, the icon can be flashed, etc.

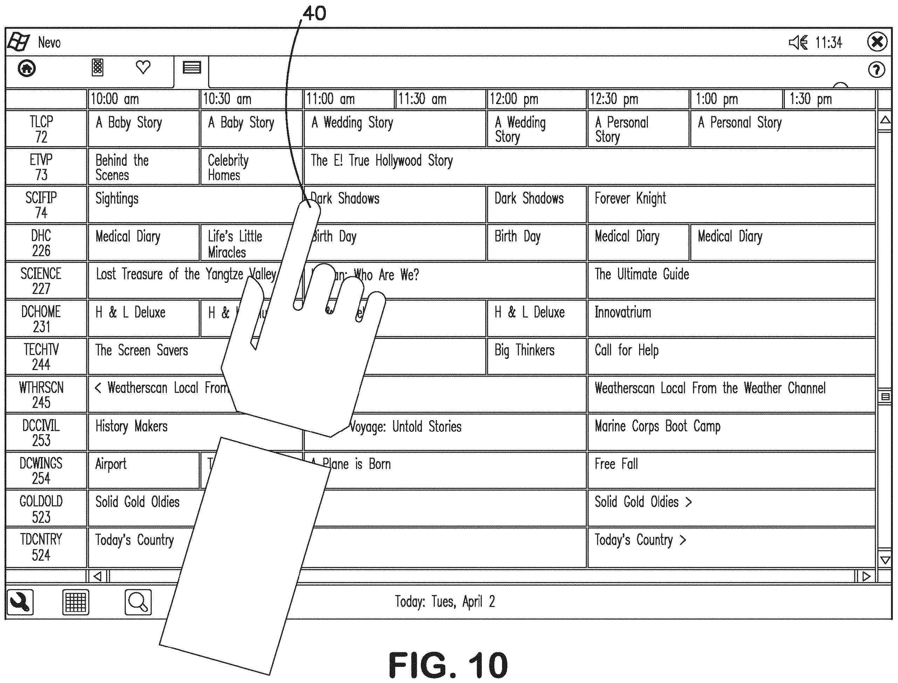

The programming information contained within the enlarged portion 30 of the program guide may also be determined based upon interaction with the un-enlarged program guide by the consumer. For example, the consumer may indicate a desire to enter the zoom mode (e.g., by touching the zoom icon which readies the device for zooming, which readiness may be indicated to the user by the display of an icon having a changed or changing appearance) followed by the consumer indicating a location within the un-enlarged program guide that the consumer wishes to have enlarged. The indication of the location may be provided by the consumer using the graphical user interface (e.g., touching a location on the display with a finger or stylus as illustrated in Fig. 10) to select a cell or area of cells of interest within the displayed un-enlarged guide, by moving the scroll bars, etc. Upon receiving the indication, the software causes appropriate programming information to be displayed in the enlarged portion 30 of the program guide. In the illustrated example, the touching of the "Dark Shadow" cell within the un-enlarged program guide may cause the enlarged portion 30 to present programming information that commences with channel 74 and time 11:00 am. It is to be understood that the user may navigate within the un-enlarged program guide to find channels and/or times of interest before performing the step of indicating which cell or cells should be enlarged. It will also be appreciated that this two step process, i.e., indicating a desire to enlarge the program guide followed by another user interaction with the device, can result in the display of predetermined information within the enlarged portion 30 as described above, e.g., favorites, programming information commencing with the channel and time in the upper left most corner of the displayed un-enlarged program guide, etc.

To change the programming information that is presented within the enlarged portion 30 of the program guide, the user can exit the zoom mode, by retouching the icon 32 for example, and then reinitiating the zoom feature at a different location within the un-enlarged program guide, for example, when a two-step process is utilized. Alternatively, the graphical user interface may be used in manner that indicates to the device that the user wishes to scroll the program guide within the enlarged display area 30 thus changing the portion of the program guide shown there within. This indication can be performed using standard GUI techniques such as associating scroll bars with the display of the enlarged portion 30, scrolling as a result of following the movement of a finger or stylus within the display, etc. In this manner, the consumer may conveniently navigate within the enlarged display portion 30 just as a consumer can navigate within the un-enlarged display portion.

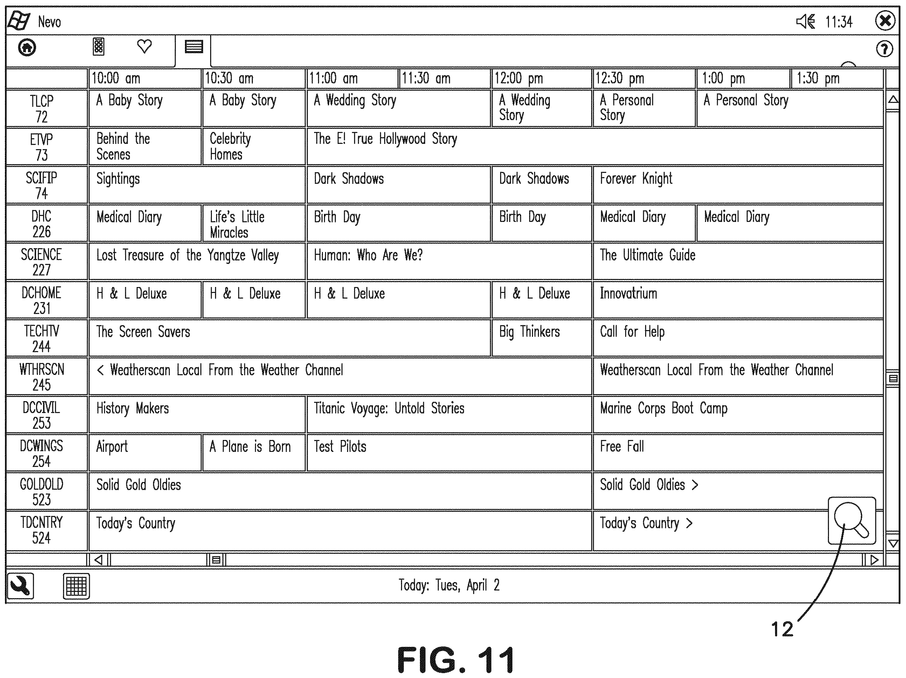

It is to be further understood that the zooming feature may also be used to present control function icons and/or other aspects of the graphical user interface in a larger, more prominent manner without limitation. An example of an enlarged icon is illustrated as icon 12 in Fig. 11 .

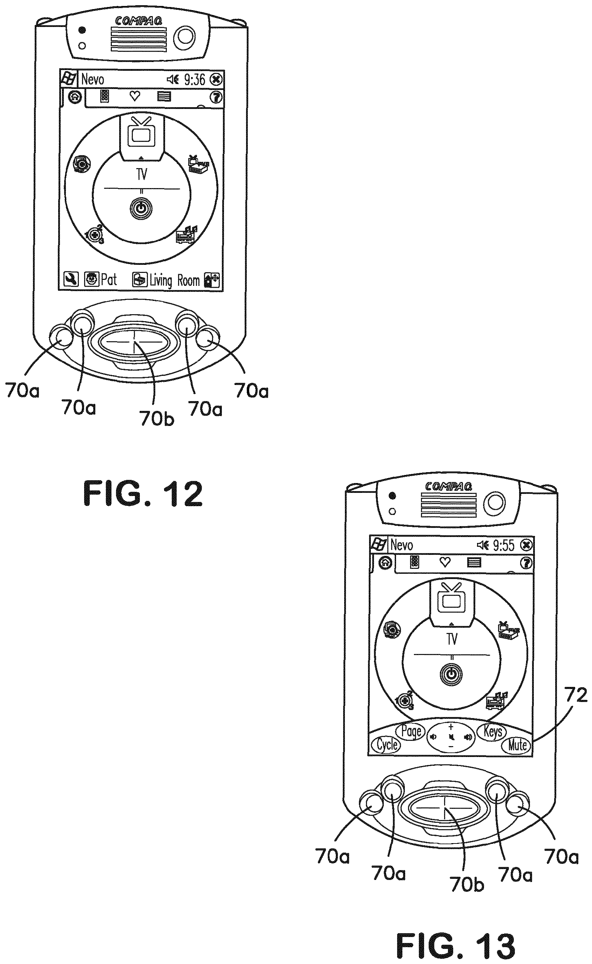

To transmit command codes to an appliance (or perform local operations), a consumer may activate hard keys 70, for example, at the bottom of the device 10 in the exemplary platform illustrated in Figs. 12 and 13 . In this illustrated example, four individual buttons 70a and one 5-way rocker button 70b (4 directions plus a "press to select") comprise the hard keys 70. The remote control application allows commonly-used functions to be mapped onto the hard keys 70. For example, operations such as "Controls" (Volume, Channel +/-, mute), "Navigation" (directional arrows and select), or "Transport" (Play, fast forward, rewind, etc) can be mapped onto the keys 70. The current operations to be performed in response to activation of keys 70 can be presented in a display 72, shown in Fig. 13 , for example, by pressing one of the hard keys 70 which is permanently assigned to the function of displaying key assignments. In the illustrated example, in the case of the illustrated platform, the display assignments key 70 is shown to be the upper one of the two right hand individual keys (labeled "keys" in the display 72).

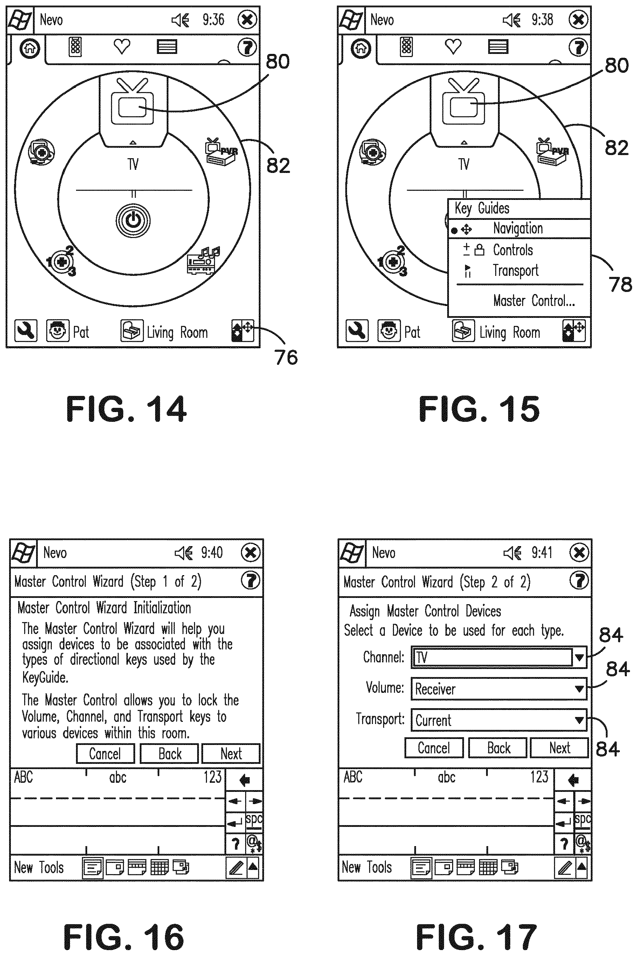

Referring now to Fig. 14 , the operations assigned to the keys 70 can be changed by the consumer activating a command button, e.g., icon 76 shown at the lower right corner of the exemplary screen shot. Activation of the command icon 76 can be used to pop-up a menu 78, an example of which is illustrated in Fig. 15 , by which the user may change the operations mapped to the keys 70. By way of illustration, the first three items on the menu correspond to the three possible assignments for the hard keys. e.g., the keys 70 may have operations mapped to them such that activation of the keys cause the device 10 to transmit command codes to command "navigation," "control" or "transport" functions of a target appliance. The fourth menu choice, "Master Control," allows the consumer to specify a specific target appliance to which any transmitted command codes are to be sent (i.e., the command codes are formatted so as to be understood by the target appliance). The default, in the absence of any user setup, can be to simply have the device 10 transmit command code signals in a format appropriate for a target appliance that has been designated for the current device mode of the platform, i.e., the device mode indicated by the icon 80 at the top of the device mode wheel 82. Selecting the "Master Control" item of the menu 78 may be used to start a Master Control Setup Wizard, an example of which is illustrated in Figs. 16 and 17 .

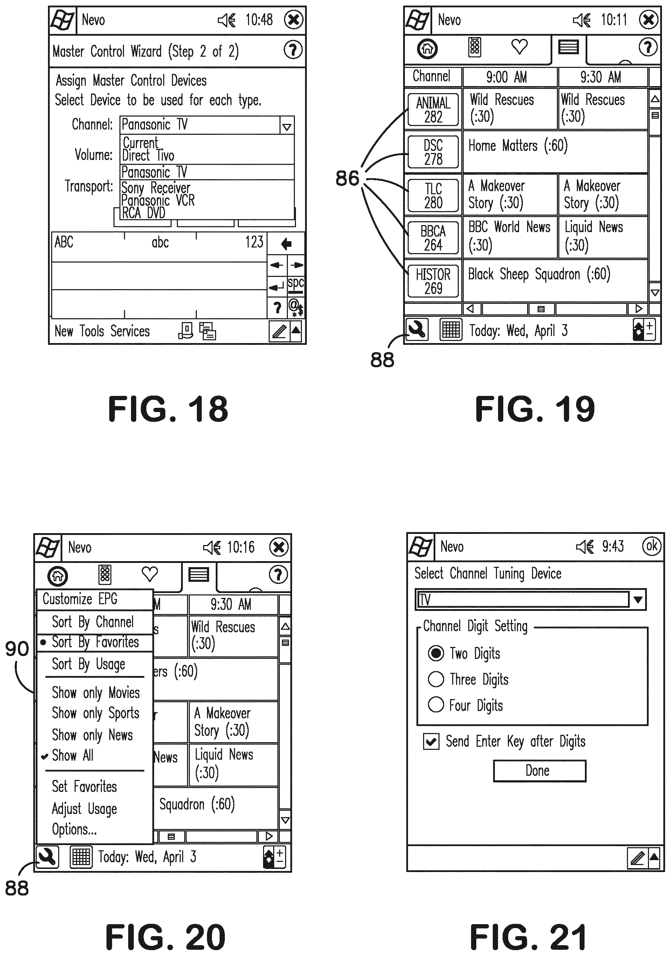

Turning to Fig. 16 , the Master Control Setup Wizard may present to a consumer one or more drop-down lists 84 by which the consumer can select the target appliance for any transmitted command signals, e.g., signals to be used for each of channel changing, volume control, and transport functions. Preferably, the assignments performed using the Master Control Setup Wizard are only with respect to the hard keys 70. Fig. 18 shows an example drop-down list from which the user may select the target device for signals to command channel changing operations. While not intended to be limiting, the choices illustrated in Fig. 18 include only devices which have been set up by the user in connection with configuring the device mode wheel 82 .

To transmit commands to tune a target appliance to a specified channel using a program guide, an example of which is illustrated in Fig. 19 , a user need only select or activate a channel button 86 which, in the illustrated example, is a soft key in the leftmost column of the program guide grid. As noted previously, activation of a channel button 86 will cause the device 10 to transmit a command signal, for example using an IR protocol, to command the target appliance to switch to the selected channel. The channel number to tune to in response to activation of a channel button 86 is preferably pre-calculated at the time the guide is downloaded from a Web site, or the like. In this regard, the guide information is populated, for example, based on the zip code and service provider information submitted by the user when registering for the service. Accordingly, in the illustrated example, activation of the "TLC" channel button in the downloaded program guide would send a command to cause the target appliance to tune to channel 280 which is the channel on which the specified service provider is known to carry TLC content.

When transmitting a command to cause the appliance to tune to a specified channel, the default channel changing operation comprises sending the desired channel digits (a minimum of two, i.e., single digit numbers are prefixed with a leading zero) as a sequence of IR data commands in the format of the channel changing device specified in the Master Control Setup. Accordingly, the actual physical transmission of the sequence of commands is no different than playing back a user-programmed macro. The consumer may be provided, however, with the capability to adjust this default sequence described above if necessary to suit his particular equipment. Any such adjustment may be performed, for example, by touching a "setup" command button 88 (e.g., the wrench icon in the lower left corner of the guide display screen). Activation of the setup command button 88 can be used to present to the consumer a pop-up, setup menu 90 as illustrated in Fig. 20 . As can be seen from the menu listings, among the setup choices can be provided a choice to allow the content of the program guide to be filtered and arranged for display. Furthermore, selecting a choice labeled "Options" can be used to invoke a configuration screen illustrated in Fig. 21 .

Using the configuration screen, the consumer may change the master channels tuning device which may offer the same list of appliances and would affect the same parameter as the "Master Control Setup" wizard described earlier in connection with Figs. 15-18 . Additionally, the configuration screen can be used to allow a consumer to modify how the IR command sequence is to be constructed, i.e., allow the consumer to vary the minimum number of digits to be sent and to specify if an "enter" command is to be transmitted after the final digit is transmitted. (The "enter" function is mandatory for a few appliance brands, in others it is optional but often will speed up the channel changing response if used).

It will be appreciated that setup menus can also be provided to allow a consumer to specify a target device for command(s) transmitted by interacting with the program guide that need not be tied to the intended target appliance associated with the hard keys 70. Additionally, provision may be made for specifying multiple target appliances for use with the program guide. For example, when the platform is setup in a mode to command appliances in a first room, a first target appliance can be associated with the program guide and when the platform is setup in a mode to command appliances in a second room, a second target appliance can be specified to be associated with the program guide. Similarly, different target appliances can be specified to be the intended target for commands transmitted as a result of interacting with the program guide for each individual consumer setup to use the platform. Still further, if the program guide is adapted to show information from multiple sources, e.g., cable and satellite, different target appliances can be associated with different listing within the program guide as a function of the programming source.

While specific embodiments of the invention have been described in detail, it will be appreciated by those skilled in the art that various modifications and alternatives to those details could be developed in light of the overall teachings of the disclosure. For example, the programming grid need not be limited to channels being displayed in horizontal rows and times in columns. Rather, the principles expressed herein would be useful in connection with any manner for displaying program information that allows the information displayed to be changed or scrolled. Accordingly, the particular arrangement disclosed is meant to be illustrative only and not limiting as to the scope of the invention which is to be given the full breadth of the appended claims and any equivalents thereof.

Selected aspects of the invention are described in the following numbered clauses.
1. In a hand-held device, a computer-readable media having instructions for displaying programming information, the instructions performing steps comprising: displaying within a display of the hand-held device at least a portion of a program guide having programming information for a plurality of channels over periods of time; accepting user input indicating a desire to enlarge a subset of the programming information for viewing within the display; and in response to the input, enlarging the subset of the programming information and displaying the enlarged subset of the programming information within the display.
2. The computer-readable media as recited in clause 1, wherein the program guide comprises a set of cells arranged in a plurality of rows corresponding to channels and a plurality of columns corresponding to periods of time.
3. The computer-readable media as recited in clause 2, wherein the subset of the programming information that is enlarged is predetermined as a function of the portion of the program guide displayed within the display at the time the user input is received.
4. The computer-readable media as recited in clause 3, wherein the subset of programming information that is enlarged is contained within program guide cells starting with a predetermined channel and a predetermined period of time.
5. The computer-readable media as recited in clause 4, wherein the predetermined channel is the channel corresponding to the top most row of cells displayed as part of the portion of the program guide.
6. The computer-readable media as recited in clause 4, wherein the predetermined period of time is the period of time corresponding to the left most column of cells displayed as part of the portion of the program guide.
7. The computer-readable media as recited in clause 2, further comprising the step of displaying a soft key by which the user inputs the desire to enlarge the subset of the programming information.
8. The computer-readable media as recited in clause 7, wherein interaction with the soft key causes the display to toggle between the display of the enlarged subset of the programming information and the display of the program guide.
9. The computer-readable media as recited in clause 8, wherein the appearance of the softkey changes to represent the current toggle state.
10. The computer-readable media as recited in clause 2, wherein the user input comprises a selection of a cell within the program guide and the subset of the programming information that is enlarged is contained within cells starting with a channel corresponding to the channel row of the cell selected and a period of time corresponding to the period of time column of the cell selected.
11. The computer-readable media as recited in clause 10, wherein the programming information that is enlarged encompasses a predetermined number of channels and predetermined periods of time.
12. The computer-readable media as recited in clause 2, wherein the programming information that is enlarged is displayed in a window that at least partially overlays the display of at least a portion of the program guide.
13. The computer-readable media as recited in clause 1, further comprising the step of accepting user input to change the subset of programming information displayed as the enlarged subset of programming information.
14. The computer-readable media as recited in clause 13, wherein the programming information displayed as the enlarged subset of programming information is changed to follow a direction of movement input by the user on the hand-held device.
15. The computer-readable media as recited in clause 14, wherein the direction of movement is input by the user dragging an object across the display of the hand-held device.
16. The computer-readable media as recited in clause 1, wherein the subset of the programming information is user-defined.
17. The cnrnputer-readable media as recited in clause 16, wherein the user-defined subset of the programming information comprises a list of user-defined favorite channels.
18. A method for controlling the operation of a consumer electronic device, comprising:
   displaying program schedule information received via a network comprised of broadcast channel identifiers and programming information for each broadcast channel identifier;
   accepting input designating a broadcast channel identifier from the program schedule information; and using the designated broadcast channel identifier to transmit a wireless signal to the consumer electronic device to cause the consumer electronic device to tune to the broadcast channel corresponding to the designated broadcast channel identifier.
19. The method as recited in clause 18, wherein the wireless signal is an IR signal.
20. The method as recited in clause 18, wherein the wireless signal is an RF signal.
21. The method as recited in clause 18, wherein the program schedule information is displayed in a touch screen of a device having a remote control application.
22. The method as recited in clause 21, wherein the program schedule information is displayed in a grid of rows and columns in which each of the broadcast channel identifiers occupy a row in a first column in the grid and the programming information occupy further columns in the grid in the same row as their corresponding broadcast channel identifier and further arranged as a function of time.
23. The method as recited in clause 22, wherein input designating a broadcast channel identifier comprises a user interacting with the touch screen to select a row in the first column.
24. The method as recited in clause 23, wherein the broadcast channel identifiers comprise a channel number and a designator of programming origin.
25. The method as recited in clause 18, wherein the wireless signal is constructed according to a user preference.
26. The method as recited in clause 25, wherein the user preference comprises requesting a transmission of an enter command as a part of the wireless signal.
27. The method as recited in clause 25, wherein the user preference comprises specifying a minimum number of digit indicators to be included as a part of the wireless signal.
28. The method as recited in clause 18, further comprising accepting user input that specifies the consumer electronic device as an intended target of the wireless signal.
29. The method as recited in clause 28, wherein the consumer electronic device is associated with a room via the user input.
30. The method as recited in clause 18, wherein the consumer electronic appliance to which the wireless signal is transmitted is selected as a function of a source of the programming corresponding to the designated broadcast channel identifier.
31. A readable media having instructions for controlling the operation of a consumer electronic device, the instructions performing steps comprising: displaying program schedule information received via a network comprised of broadcast channel identifiers and programming information for each broadcast channel identifier; accepting input designating a broadcast channel identifier from the program schedule information; and using the designated broadcast channel identifier to transmit a wireless signal to the consumer electronic device to cause the consumer electronic device to tune to the broadcast channel corresponding to the designated broadcast channel identifier.
32. The readable media as recited in clause 31, wherein the program schedule information is displayed in a touch screen of a device having a remote control application.
33. The readable media as recited in clause 32, wherein the program schedule information is displayed in a grid of rows and columns in which each of the broadcast channel identifiers occupy a row in a first column in the grid and the programming information occupy further columns in the grid in the same row as their corresponding broadcast channel identifier and further arranged as a function of time.
34. The readable media as recited in clause 33, wherein input designating a broadcast channel identifier comprises a user interacting with the touch screen to select a row in the first column.
35. The readable media as recited in clause 34, wherein the broadcast channel identifiers comprise a channel number and a designator of programming origin.
36. The readable media as recited in clause 31, wherein the wireless signal is transmitted using an IR protocol.
37. The readable media as recited in clause 31, wherein the wireless signal is transmitted using an RF protocol.
38. The readable media as recited in clause 31, wherein the wireless signal is transmitted using a channel digit setting specified by a user.
39. The readable media as recited in clause 31, wherein the wireless signal is transmitted using an enter command if specified by the user.
40. An electronic program guide system, comprising: a display; a schedule presented in the display as a grid of two-dimensionally arranged cells with a program identifier being displayed in each of the cells, the grid having a plurality of channels listed in a first dimension and time listed in a second dimension of which a portion of the entirety of the grid is displayable in the display ; a first scroll bar associated with the schedule having a first slider for indicating a position of the displayed portion of the grid relative to the entirety of the grid in one of the dimensions ; a user input device coupled to the display, wherein a first user input is used to change the position of the first slider and a second user input is used to cause the displayed portion of the grid to change; wherein display of the portion of the grid is not changed until the second user input is received and wherein, as the first slider is moved with the first user input, an indication of the position of the portion of the grid relative to the entirety of the grid in the one of the dimensions corresponding to the current position of the moving slider is displayed.
41. The system as set forth in clause 40, wherein the first scroll bar indicates a position of the displayed portion of the grid relative to the entirety of the grid in the first dimension and further comprising a second scroll bar associated with the schedule having a second slider for indicating a position of the displayed portion of the grid relative to the entirety of the grid in the second dimensions and wherein the user input device is used to change the position of the first or second slider and, as either the first or second slider is moved with the first user input, an indication of the position of the portion of the grid relative to the entirety of the grid in the dimension corresponding to the current position of the moving first or second slider is displayed.
42. The system as set forth in clause 41, wherein the entirety of the grid includes twenty four hours in the second dimension.
43. The system as set forth in clause 41, further comprising activatable soft keys for changing the position of the first or second sliders and the portion of the grid being displayed by a predetermined amount.
44. The system as set forth in clause 40, wherein moving the first slider with the first user input displays a channel designation that changes as the position of the first slider changes so as to provide an indication of the portion of the entirety of the grid that would be displayable in the display in response to receipt of the second input.
45. The system as set forth in clause 41, wherein moving the second slider with the first user input displays a time designation that changes as the position of the second slider changes so as to provide an indication of the portion of the entirety of the grid that would be displayable in the display in response to receipt of the second input.
46. An electronic program guide system, comprising: a display ; an updatable schedule presentable in the display as a grid of two-dimensionally arranged cells with a program identifier being displayed in each of the cells, the grid having a plurality of channels listed in a first dimension and time listed in a second dimension, wherein the schedule maintains information for a given period of days; and a graphical user interface element shown in the display that functions to indicate when the schedule must be updated with grids for additional day periods.
47. An electronic program guide system, comprising: a display; a calendar shown in the display having a plurality of days; and a graphical user interface input device for use in selecting one of the days in the calendar whereupon the selection results in the display of a schedule for the selected day presented in the display as a grid of two-dimensionally arranged cells with a program identifier being displayed in each of the cells, the grid having a plurality of channels listed in a first dimension and time listed in a second dimension.
48. The system as recited in clause 40, wherein the first user input comprises the user engaging the first slider and the second user input comprises the user releasing the first slider.

## Claims

1. A method for controlling the operation of a plurality of consumer electronic devices, comprising:
displaying a plurality of broadcast channel identifiers each corresponding to a broadcast channel in a display of a portable controlling device (10) adapted to command at least channel tuning operations of the plurality of consumer electronic devices, wherein the plurality of broadcast channel identifiers is comprised of at least one broadcast identifier originating from a first one of a plurality of broadcast service providers and at least one broadcast identifier originating from a second one of a plurality of broadcast service providers different than the first one of the plurality of broadcast service providers;
receiving a first input into the portable controlling device (10) that functions to designate one of the plurality of broadcast channel identifiers; and
using the first input to cause the portable controlling device (10) to transmit a channel tuning command to thereby cause one of the plurality of consumer electronic devices to tune to the broadcast channel corresponding to the designated broadcast channel identifier;
wherein the portable controlling device (10) uses one of a plurality of different communication protocols that is associated with the one of the plurality of broadcast service providers from which the designated one of the plurality of broadcast channel identifiers originates when transmitting the channel tuning command and wherein the plurality of broadcast service providers comprises at least two different broadcast service providers selected from service providers of a cable service provider type and/or a satellite service provider type.

2. The method as recited in claim 1, wherein program schedule information received via a network comprises the plurality of broadcast channel identifiers.

3. The method as recited in claim 1, wherein second input provided to the portable controlling device (10) defines the broadcast service providers that is associated with each of the plurality of broadcast channel identifiers.

4. The method as recited in claim 1, wherein at least one of the plurality of different communication protocols comprises is an IR signal communication protocol.

5. The method as recited in claim 1, wherein at least one of the plurality of different communication protocols comprises an RF signal communication protocol.

6. The method as recited in claim 1, wherein the plurality of broadcast channel identifiers are provided as a part of program schedule information that is displayed in a touch screen of the portable controlling device (10).

7. The method as recited in claim 6, wherein the program schedule information is displayed in a grid of rows and columns in which each of the plurality of broadcast channel identifiers occupies a row in a first column in the grid and the programming information occupies further columns in the grid in the same row as its corresponding one of the plurality of broadcast channel identifiers with the programming information being further arranged as a function of time.

8. The method as recited in claim 7, wherein the first input comprises a user interacting with the touch screen to select a row in the first column.

9. The method as recited in claim 1, wherein the channel tuning command is further constructed according to a user preference.

10. The method as recited in claim 9, wherein the user preference comprises requesting a transmission of an enter command as a part of the channel tuning command.

11. The method as recited in claim 9, wherein the user preference comprises specifying a minimum number of digit indicators to be included as a part of the channel tuning command.

## Patentansprüche

1. Verfahren zum Steuern des Betriebs einer Vielzahl von elektronischen Verbrauchergeräten, das umfasst:
Anzeigen einer Vielzahl von Rundfunkkanal-Identifizierern, die jeder einem Rundfunkkanal entsprechen, auf einer Anzeige eines tragbaren Steuergeräts (10), das zum Befehlen von zumindest Kanalabstimmungsvorgängen der Vielzahl von elektronischen Verbrauchergeräte geeignet ist, wobei die Vielzahl von Rundfunkkanal-Identifizierern aus zumindest einem Rundfunk-Identifizierer, der von einem ersten einer Vielzahl von Rundfunkdienstanbietern stammt, und zumindest einem Rundfunk-Identifizierer gebildet sind, der von einem zweiten einer Vielzahl von Rundfunkdienstanbietern stammt, welcher ein anderer als der erste der Vielzahl von Rundfunkdienstanbietern ist;
Empfangen einer ersten Eingabe im tragbaren Steuergerät (10), die zum Bezeichnen von einem der Vielzahl von Rundfunkkanal-Identifizierern fungiert; und
Verwenden der ersten Eingabe zum Veranlassen, dass das tragbare Steuergerät (10) einen Kanalabstimmbefehl überträgt, um dadurch eines der Vielzahl von elektronischen Verbrauchergeräten zu veranlassen, auf den Rundfunkkanal, der dem bezeichneten Rundfunkkanal-Identifizierer entspricht, abzustimmen;
wobei das tragbare Steuergerät (10) eines einer Vielzahl von verschiedenen Kommunikationsprotokollen verwendet, das mit dem einen der Vielzahl von Rundfunkdienstanbietern assoziiert ist, von dem der bezeichnete der Vielzahl von Rundfunkkanal-Identifizierern stammt, wenn es den Kanalabstimmbefehl überträgt, und wobei die Vielzahl von Rundfunkdienstanbietern zumindest zwei verschiedene Rundfunkdienstanbieter umfasst, die aus Dienstanbietern einer Kabeldienstanbieterart und/ oder einer Satellitendienstanbieterart ausgewählt sind.

2. Verfahren nach Anspruch 1, wobei Programmzeitplaninformation, die über ein Netzwerk empfangen wird, die Vielzahl von Rundfunkkanal-Identifizierern umfasst.

3. Verfahren nach Anspruch 1, wobei eine zweite Eingabe, die dem tragbaren Steuergerät (10) zugeführt wird, den Rundfunkdienstanbieter definiert, der mit jedem der Vielzahl von Rundfunkkanal-Identifizierern assoziiert ist.

4. Verfahren nach Anspruch 1, wobei zumindest eines der Vielzahl von verschiedenen Kommunikationsprotokollen ein IR-Signalkommunikationsprotokoll umfasst.

5. Verfahren nach Anspruch 1, wobei zumindest eines der Vielzahl von verschiedenen Kommunikationsprotokollen ein RF-Signalkommunikationsprotokoll umfasst.

6. Verfahren nach Anspruch 1, wobei die Vielzahl von Rundfunkkanal-Identifizierern als Teil von Programmzeitplaninformation vorgesehen sind, die auf einem Tastbildschirm des tragbaren Steuergeräts (10) angezeigt wird.

7. Verfahren nach Anspruch 6, wobei die Programmzeitplaninformation in einem Gitter aus Zeilen und Spalten angezeigt wird, in dem jeder der Vielzahl von Rundfunkkanal-Identifizierern eine Zeile in einer ersten Spalte im Gitter belegt und die Programminformation weitere Spalten im Gitter in derselben Zeile wie ihr entsprechender der Vielzahl von Rundfunkkanal-Identifizierern belegt, wobei Programminformation ferner als eine Zeitfunktion angeordnet ist.

8. Verfahren nach Anspruch 7, wobei die erste Eingabe einen Anwender umfasst, der zum Auswählen einer Zeile in der ersten Spalte mit dem Tastbildschirm interagiert.

9. Verfahren nach Anspruch 1, wobei der Kanalabstimmbefehl ferner gemäß einer Anwenderpräferenz konstruiert ist.

10. Verfahren nach Anspruch 9, wobei die Anwenderpräferenz das Anfordern einer Übertragung eines Eingabebefehls als Teil des Kanalabstimmbefehls umfasst.

11. Verfahren nach Anspruch 9, wobei die Anwenderpräferenz das Spezifizieren einer minimalen Anzahl von Ziffernindikatoren umfasst, die als Teil des Kanalabstimmbefehls beinhaltet werden sollen.

## Revendications

1. Procédé de commande du fonctionnement d'une pluralité de dispositifs électroniques grand public, comprenant :
l'affichage d'une pluralité d'identifiants de chaîne de radiodiffusion correspondant chacun à une chaîne de radiodiffusion dans un afficheur d'un dispositif de commande portatif (10) conçu pour commander au moins des opérations de réglage d'accord de chaîne de la pluralité de dispositifs électroniques grand public, dans lequel la pluralité d'identifiants de chaîne de radiodiffusion est composée d'au moins un identifiant de radiodiffusion provenant d'un premier fournisseur d'une pluralité de fournisseurs de service de radiodiffusion et d'au moins un identifiant de radiodiffusion provenant d'un second fournisseur d'une pluralité de fournisseurs de service de radiodiffusion différent du premier fournisseur de la pluralité de fournisseurs de service de radiodiffusion ;
la réception d'une première saisie dans le dispositif de commande portatif (10) qui fonctionne pour désigner l'un de la pluralité d'identifiants de chaîne de radiodiffusion ; et
l'utilisation de la première saisie pour amener le dispositif de commande portatif (10) à transmettre un ordre de réglage d'accord de chaîne pour de ce fait amener l'un de la pluralité de dispositifs électroniques grand public à s'accorder sur la chaîne de radiodiffusion correspondant à l'identifiant de chaîne de radiodiffusion désigné ;
dans lequel le dispositif de commande portatif (10) utilise l'un d'une pluralité de différents protocoles de communication qui est associé à l'un de la pluralité de fournisseurs de service de radiodiffusion à partir desquels est originaire l'identifiant désigné de la pluralité d'identifiants de chaîne de radiodiffusion transmettant l'ordre de réglage d'accord de chaîne et dans lequel la pluralité de fournisseurs de service de radiodiffusion comprend au moins deux fournisseurs différents de service de radiodiffusion émission sélectionnés à partir de fournisseurs de service d'un type de fournisseur de service par câble et/ou d'un type de fournisseur de service par satellite.

2. Procédé selon la revendication 1, dans lequel des informations de programmation d'émissions reçues via un réseau comprennent la pluralité d'identifiants de chaîne de radiodiffusion.

3. Procédé selon la revendication 1, dans lequel une seconde saisie fournie au dispositif de commande portatif (10) définit le fournisseur de service de radiodiffusion qui est associé à chacun de la pluralité d'identifiants de canal de radiodiffusion.

4. Procédé selon la revendication 1, dans lequel au moins un de la pluralité de protocoles de communication différents comprend un protocole de communication de signal IR.

5. Procédé selon la revendication 1, dans lequel au moins un de la pluralité de protocoles de communication différents comprend un protocole de communication de signal RF.

6. Procédé selon la revendication 1, dans lequel la pluralité d'identifiants de chaîne de radiodiffusion est fournie en tant que partie d'informations de programmation d'émissions qui est affichée sur un écran tactile du dispositif de commande portatif (10).

7. Procédé selon la revendication 6, dans lequel les informations de programmation d'émissions sont affichées dans une grille de rangées et de colonnes dans lesquelles chacun de la pluralité d'identifiants de chaîne de radiodiffusion occupe une rangée dans une première colonne dans la grille et les informations de programmation d'émissions occupent des colonnes supplémentaires dans la grille dans la même rangée que son identifiant correspondant de la pluralité d'identifiants de chaîne de radiodiffusion, les informations d'émissions étant agencées en outre en fonction de l'heure.

8. Procédé selon la revendication 7, dans lequel la première saisie comprend un utilisateur interagissant avec l'écran tactile pour sélectionner une rangée dans la première colonne.

9. Procédé selon la revendication 1, dans lequel l'ordre de réglage d'accord de chaîne est en outre construit selon une préférence utilisateur.

10. Procédé selon la revendication 9, dans lequel la préférence d'utilisateur comprend la requête d'une transmission d'un ordre de saisie en tant que partie de l'ordre de réglage d'accord de chaîne.

11. Procédé selon la revendication 9, dans lequel la préférence utilisateur comprend la spécification d'un nombre minimal d'indicateurs chiffrés à inclure en tant que partie de l'ordre de réglage d'accord de chaîne.
